# EUROPÄISCHE PATENTSCHRIFT

(11) **EP 3 833 940 B1**
(45) Veröffentlichungstag und Bekanntmachung des Hinweises auf die Patenterteilung: **30.07.2025**
(21) Anmeldenummer: 19748521.2
(22) Anmeldetag: 30.07.2019
(51) Int. Cl.: G01F 1/84, G01N 9/00, G01F 15/00, H01F 5/00, G01F 15/18

(54) **MESSAUFNEHMER UND MESSGERÄT**
MEASURING SENSOR AND MEASUREMENT DEVICE
CAPTEUR DE MESURE ET APPAREIL DE MESURE

(30) Priorität: 08.08.2018 DE 102018119332
(43) Veröffentlichungstag der Anmeldung: 16.06.2021
(73) Patentinhaber: Endress+Hauser Flowtec AG, 4153 Reinach (CH)
(72) Erfinder: SCHWENTER, Benjamin, 4147 Aesch (CH); WERNER, Marc, 79639 Grenzach-Wyhlen (DE); HOLLINGER, Claude, 4147 Aesch (CH); STUCKI, Martin, 4133 Pratteln (CH)
(74) Vertreter: Endress + Hauser Group Services (Deutschland) AG+Co. KG
(86) Internationale Anmeldenummer: PCT/EP2019/070487
(87) Internationale Veröffentlichungsnummer: WO 2020/030472

(56) Entgegenhaltungen:
- EP-A1- 1 105 700
- EP-A2- 0 908 705
- EP-B1- 0 908 705
- EP-B1- 1 105 700
- DE-A1- 102015 120 087
- US-A- 5 349 872
- US-A1- 2017 146 380

## Beschreibung

Die Erfindung betrifft einen Messaufnehmer eines Messgeräts zum Erfassen eines Massedurchflusses oder einer Dichte eines durch mindestens ein Messrohr des Messaufnehmers strömenden Mediums, wobei ein Erreger dazu eingerichtet ist, das mindestens eine Messrohr zum Schwingen anzuregen, und wobei zumindest zwei Sensoren dazu eingerichtet sind, die Messrohrschwingungen zu erfassen. Die Erfindung betrifft des Weiteren ein Messgerät, welches einen solchen Messaufnehmer umfasst.

Der oben genannten Erreger und/oder die Sensoren weisen üblicherweise eine Spulenvorrichtung mit einer Spule auf, welche auf oder in einer Leiterplatte angeordnet ist, siehe beispielsweise die DE102015120087A1. Die Spulenvorrichtungen sind ihrerseits über eine Halterung an einem Messrohr oder einem Trägerkörper des Messaufnehmers angebracht. Bei Hochtemperaturanwendungen kann ein notwendiger mechanischer Kontakt zwischen der Leiterplatte und einer Halterung der Leiterplatte nach wiederholten Temperaturwechseln oder auch bei Anliegen einer hohen Temperatur zu einer Zerstörung der Leiterplatte führen.

Die EP1105700A1 beschreibt ein Coriolis-Massedurchflussmessgerät mit einer herkömmlichen Sensorspulenvorrichtung mit einer Spulenhalterung und einer Wickelspule.

Aufgabe der Erfindung ist es daher, einen hochtemperaturstabilen Messaufnehmer sowie ein Messgerät umfassend einen solchen Messaufnehmer vorzuschlagen.

Die Aufgabe wird gelöst durch einen Messaufnehmer gemäß Anspruch 1 sowie ein Messgerät nach Anspruch 10.

Ein erfindungsgemäßer Messaufnehmer eines Messgeräts zum Erfassen eines Massedurchflusses oder einer Dichte eines durch mindestens ein Messrohr des Messaufnehmers strömenden Mediums, umfasst:
das mindestens eine Messrohr mit einem Einlauf und einem Auslauf, welches dazu eingerichtet ist, das Medium zwischen Einlauf und Auslauf zu führen;
mindestens einen Erreger, welcher dazu eingerichtet ist, das mindestens eine Messrohr zu Schwingungen anzuregen;
mindestens zwei Sensoren, welche dazu eingerichtet sind, die Auslenkung der Schwingungen mindestens eines Messrohrs zu erfassen;
wobei mindestens ein Erreger sowie die Sensoren jeweils eine Spulenvorrichtung mit jeweils mindestens einer Spule, sowie jeweils eine Magnetvorrichtung aufweisen, wobei die Magnetvorrichtungen relativ zur jeweiligen Spulenvorrichtung bewegbar sind,
und wobei die Magnetvorrichtung und die Spulenvorrichtung eines Erregers bzw. Sensors mittels magnetischer Felder miteinander wechselwirken,
wobei die Spulenvorrichtung eine Leiterplatte mit mindestens einer Leiterplattenschicht aufweist, wobei die Spule auf und/oder in mindestens einer Leiterplattenschicht angeordnet ist, wobei die Leiterplatte einen ersten Wärmeausdehnungskoeffizienten aufweist,
wobei der Messaufnehmer einen Trägerkörper aufweist, welcher dazu eingerichtet ist, das Messrohr zu halten,
wobei zumindest eine Spulenvorrichtung der Sensoren und/oder die Spulenvorrichtung des Erregers jeweils mittels einer Haltevorrichtung am Trägerkörper oder an einem Messrohr befestigt ist,
wobei die Haltevorrichtung dazu eingerichtet ist, die Leiterplatte einzuspannen um die Leiterplatte mittels lateralem Reibschluss zu halten, wobei die Leiterplatte mittels mindestens einem Halteelement der Haltevorrichtung mit der Haltevorrichtung mechanisch kontaktiert ist,
wobei das Halteelement einen zweiten Wärmeausdehnungskoeffizienten aufweist,
wobei der erste Wärmeausdehnungskoeffizient und der zweite Wärmeausdehnungskoeffizient weniger als 3*10⁻⁶ / Kelvin, und insbesondere weniger als weniger als 2*10⁻⁶ / Kelvin und bevorzugt weniger als weniger als 1.5*10⁻⁶ / Kelvin voneinander abweichen,
wobei die Leiterplatte durch einen Sinterprozess hergestellt ist, wobei die Leiterplatte beispielsweise ein keramisches Material aufweist,
wobei das keramische Material insbesondere eine Niedertemperatur-Einbrand-Keramik ist.

Niedertemperatur-Einbrand-Keramik, auch als Low Temperature Cofired Ceramics (LTCC) bekannt, eignet sich besonders als Grundlage zur Fertigung von Spulenvorrichtungen aufgrund guter Eigenschaften im Hinblick auf geringe Störung von Spuleneigenschaften und guter Aufbringbarkeit von elektrisch leitfähigen Leiterbahnen, welche zur Ausbildung von Spulen herangezogen werden können. Ein Nachteil solcher Keramiken ist jedoch eine im Vergleich zu Metallen höhere Sprödigkeit und somit erhöhte Empfindlichkeit gegenüber mechanischer Belastung. Durch eine erfindungsgemäße Anpassung des ersten Wärmeausdehnungskoeffizients und des zweiten Wärmeausdehnungskoeffizients lässt sich dieser Nachteil jedoch umgehen.

In einer Ausgestaltung umfasst das Halteelement zumindest eines der folgenden Materialien: Zirkonium, Titan, Tantal.

Insbesondere in Kombination mit Niedertemperatur-Einbrand-Keramik als Leiterplatte ergeben sich geringe Unterschiede zwischen den Wärmeausdehnungskoeffizienten.

In einer Ausgestaltung ist der erste Wärmeausdehnungskoeffizient kleiner ist als 9*10⁻⁶ / Kelvin, und insbesondere kleiner als 8*10⁻⁶ / Kelvin, und bevorzugt kleiner als 7*10⁻⁶ / Kelvin ist.

Ein großer Wärmeausdehnungskoeffizient der Leiterplatte kann sich nachteilig auf magnetische Eigenschaften Spule auswirken, da beispielsweise eine Induktivität einer Spule unter anderem von ihren geometrischen Abmessungen abhängt, welche Induktivität sich somit bei Temperaturänderung mit verändern würde. Dies ist beispielsweise im Hinblick auf eine Messsignalauswertung zu vermeiden.

In einer Ausgestaltung ist die Leiterplatte mittels einer Schraubung, Klemmung, oder mittels mindestens einer Niete oder mindestens einem Bolzen gehalten.

In einer Ausgestaltung ist das Halteelement an einem Haltevorrichtungskörper befestigt.

Der Haltevorrichtungskörper kann dabei am Messrohr oder am Trägerkörper angeordnet sein.

In einer Ausgestaltung weist die Leiterplatte eine Bohrung auf, in welcher Bohrung eine Schraube angeordnet ist, welche in ein Gewinde einer Bohrung der Haltevorrichtung eingreift, wobei mittels der Schraube eine Pressung auf die Leiterplatte ausgeübt wird.

In einer Ausgestaltung ist die Haltevorrichtung am Trägerkörper befestigt.

Dies ist vorteilhaft, da der Trägerkörper akustisch vom Messrohr weitgehend entkoppelt ist und die Spulenvorrichtung praktisch nicht durch Messrohrbewegungen beeinflusst wird. Dies erhöht die Haltbarkeit der Spulenvorrichtung.

In einer Ausgestaltung weist der Messaufnehmer zwei Sammler auf, wobei ein erster Sammler auf einer stromaufwärtsgerichteten Seite des Messaufnehmers dazu eingerichtet ist, ein aus einer Rohrleitung in den Messaufnehmer einströmendes Medium aufzunehmen und zum Einlauf des mindestens einen Messrohrs zu führen,
wobei ein zweiter Sammler dazu eingerichtet ist, das aus dem Auslauf des mindestens einen Messrohrs austretende Medium aufzunehmen und in die Rohrleitung zu führen.

In einer Ausgestaltung weist der Messaufnehmer zwei Prozessanschlüsse, insbesondere Flansche auf, welche dazu eingerichtet sind, den Messaufnehmer mit einer Rohrleitung zu verbinden.

Ein erfindungsgemäßes Messgerät umfasst:
Einen Messaufnehmer nach einem der vorigen Ansprüche;
eine elektronische Mess-/Betriebsschaltung, wobei die elektronische Mess-/Betriebsschaltung dazu eingerichtet ist, die Sensoren und den Erreger zu betreiben, und mittels elektrischer Anschlussleitungen mit diesen verbunden ist,
wobei die mindestens eine elektrische Verbindung mittels einer Kabelführung zur elektronischen Mess-/Betriebsschaltung geführt ist,
wobei die elektronische Mess-/Betriebsschaltung weiter dazu eingerichtet ist, Massedurchflussmesswerte und/oder Dichtemesswerte zu ermitteln und bereitzustellen,
wobei das Messgerät insbesondere ein Elektronikgehäuse zum Behausen der elektronischen Mess-/Betriebsschaltung aufweist.

Im Folgenden wird die Erfindung anhand von Ausführungsbeispielen beschrieben.
Fig. 1 skizziert ein Messgerät mit einem erfindungsgemäßen Messaufnehmer.
Fig. 2 skizziert eine Spulenvorrichtung.
Fig. 3 skizziert zwei erfindungsgemäße Haltevorrichtungen für Spulenvorrichtungen.
Fig. 4 skizziert eine Anordnung von Schwingungssensoren eines Messaufnehmers bezüglich eines Messrohrs.

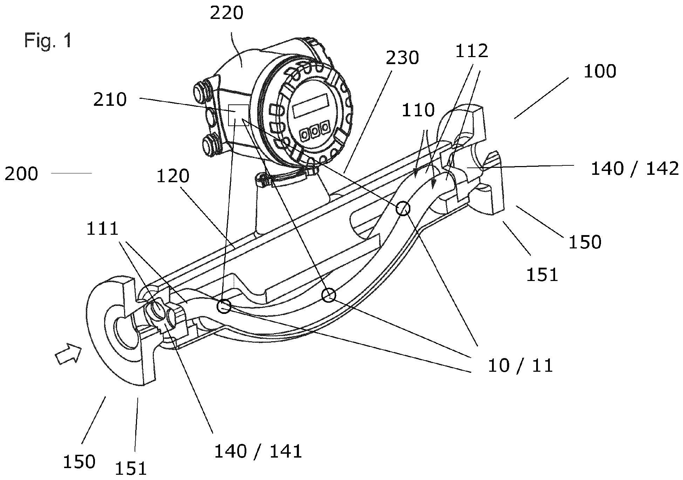

Fig. 1 skizziert ein Messgerät 200 mit einem Messaufnehmer 100, wobei der Messaufnehmer zwei Messrohre 110 aufweist, welche durch einen Trägerkörper 120 des Messaufnehmers gehalten sind. Die Messrohre münden einlaufseitig in einen ersten Sammler 141 und auslaufseitig in einen zweiten Sammler 142, wobei die Sammler 140 dazu eingerichtet sind, ein von einer Rohrleitung (nicht dargestellt) in den Messaufnehmer einströmendes Medium aufzunehmen und gleichmäßig auf die Messrohre zu verteilen. Entsprechend ist der zweite Sammler dazu eingerichtet, das aus den Messrohren herausströmende Medium aufzunehmen und in die Rohrleitung zu überführen. Der Messaufnehmer ist dabei über Prozessanschlüsse 150, insbesondere Flansche 151 an die Rohrleitung angeschlossen. Der Messaufnehmer weist einen Schwingungserreger 11 auf, welcher dazu eingerichtet ist, die Messrohre zum Schwingen anzuregen. Der Messaufnehmer weist zusätzlich zwei Schwingungssensoren 10 auf, welche dazu eingerichtet sind, die Schwingungen der Messrohre zu erfassen.

Der Fachmann ist dabei nicht auf die hier genannten Anzahlen von Messrohren, Schwingungserregern und Schwingungssensoren beschränkt. Die hier gezeigte Ausführung ist in diesen Aspekten beispielhaft.

Das Messgerät weist eine elektronische Mess-/Betriebsschaltung 210 auf, welche dazu eingerichtet ist, den Schwingungserreger sowie die Schwingungssensoren zu betreiben, und Massedurchfluss- und/oder Dichtemesswerte des Mediums zu berechnen und auszugeben. Die elektronische Mess-/Betriebsschaltung ist dabei mittels elektrischer Verbindungen 230 mit den Schwingungssensoren sowie dem Schwingungserreger verbunden. Das Messgerät weist ein Elektronikgehäuse 220 auf, in welchem die elektronische Mess-/Betriebsschaltung angeordnet ist. Zur Bestimmung des Massedurchflusses nutzt das Messgerät den Coriolis-Effekt, welcher aufgrund von Messrohrschwingungen auf das strömende Medium wirkt, wobei die Strömung die Messrohrschwingungen charakteristisch beeinflusst.

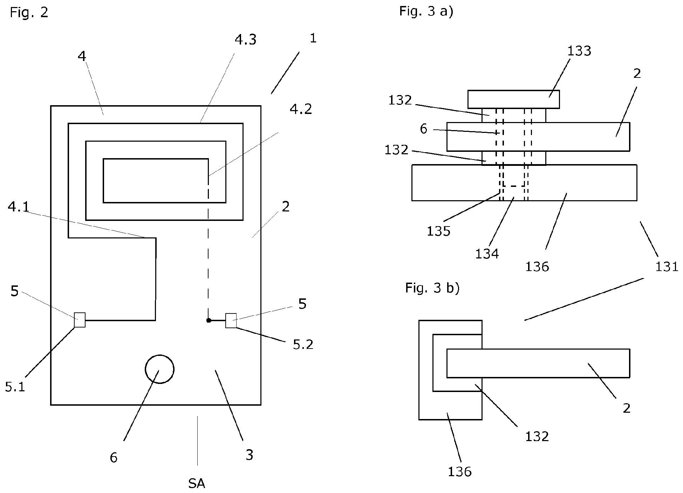

Fig. 2 zeigt eine Aufsicht auf eine Spulenvorrichtung 1 mit einer Leiterplatte 2, einer ersten Seitenfläche 3.1 und einer zweiten Seitenfläche 3.2 aufweist. Eine Spule 4 mit einem ersten Spulenende 4.1 und einem zweiten Spulenende 4.2 ist in Form einer elektrisch leitfähigen Leiterbahn 4.3 wie hier dargestellt auf die erste Seitenfläche 3.1 aufgebracht. Die Spulenvorrichtung weist Kontaktierungselemente 5 auf, mit einem ersten Kontaktierungselement 5.1 und einem zweiten Kontaktierungselement 5.2. Das erste Kontaktierungselement ist dabei mit dem ersten Spulenende 4.1 verbunden, und das zweite Kontaktierungselement ist mit dem zweiten Spulenende 4.2 verbunden. Die Kontaktierungselemente sind dazu eingerichtet, mit elektrischen Verbindungsleitungen 230 kontaktiert zu werden, mittels welchen die Spulenvorrichtung mit der elektronischen Mess-/Betriebsschaltung verbindbar ist. Die Leiterplatte kann eine Mehrschichtleiterplatte sein, und auf mehreren Leiterplattenschichten jeweils eine Spule aufweisen, wobei benachbarte Spulen beispielsweise mittels Durchkontaktierungen verbindbar sind. Der Fachmann wird sich Spulenvorrichtungen gemäß seinen Bedürfnissen auswählen. Die in Fig. 2 skizzierte Spulenvorrichtung ist rein beispielhaft und nicht einschränkend auszulegen. Die Leiterplatte kann wie hier dargestellt eine Bohrung 6 zur Aufnahme einer Schraube, eines Bolzens oder einer Niete aufweisen.

Figs. 3 a) und 3 b) skizzieren jeweils eine beispielhafte erfindungsgemäße Haltevorrichtungen 131 für jeweils eine Leiterplatte 2 einer Spulenvorrichtung. Die Haltevorrichtung weist jeweils einen Haltevorrichtungskörper 136 auf, welcher beispielsweise mit einem Messrohr oder mit dem Trägerkörper verbunden ist. Die geometrische Ausgestaltung der Haltevorrichtung unterliegt der Wahl des Fachmanns.

Fig. 3 a) zeigt eine Haltevorrichtung 131 mit einem Haltevorrichtungskörper 136, zwei Halteelementen 132 und einer Schraube 133, wobei die Leiterplatte mittels der Schraube zwischen einem Schraubenkopf und dem Haltevorrichtungskörper eingespannt ist. Zwischen der Leiterplatte 2 und dem Schraubenkopf bzw. dem Haltevorrichtungskörper 136 ist jeweils ein Halteelement angeordnet, welche mit der Leiterplatte in mechanischem Kontakt stehen. Die Schraube verläuft dabei durch Öffnungen, beispielsweise Bohrungen, der Halteelemente sowie der Leiterplatte und greift in ein Gewinde 135 einer Bohrung der Haltevorrichtung 134 ein. Die Bohrung der Leiterplatte 6 sowie die Öffnungen der Halteelemente weisen dabei jeweils einen Durchmesser auf, welcher temperaturschwankungsbedingte Durchmesseränderungen der Schraube aufnehmen kann. Der Fachmann richtet sich dabei nach bekannten Wärmeausdehnungskoeffizienten der eingesetzten Materialien. Die Leiterplatte ist also durch eine Schraubung am Haltevorrichtungskörper 136 befestigt.

Fig. 3 b) zeigt eine Haltevorrichtung 131 mit einem Haltevorrichtungskörper 136 mit einem Halteelement 132, welches Halteelement die Leiterplatte 2 teilweise umgreift und mittels einer Klemmung festhält. Der Fachmann wird eine Klemmung gemäß seinen Bedürfnissen einrichten.

Der in Figs. 3 a) und 3 b) gezeigte Haltevorrichtungskörper dient zur Veranschaulichung der Erfindung. Der Haltevorrichtungskörper kann ein oder mehrere Körperelemente aufweisen, der Fachmann wird die Haltevorrichtung gemäß seiner Bedürfnisse einrichten.

Erfindungsgemäß weist die Leiterplatte einen ersten Wärmeausdehnungskoeffizienten und das mindestens eine Halteelement einen zweiten Wärmeausdehnungskoeffizienten auf, wobei der erste Wärmeausdehnungskoeffizient und der zweite Wärmeausdehnungskoeffizient weniger als 3*10⁻⁶ / Kelvin, und insbesondere weniger als weniger als 2*10⁻⁶ / Kelvin und bevorzugt weniger als weniger als 1.5*10⁻⁶ / Kelvin voneinander abweichen. Auf diese Weise ist sichergestellt, dass die Leiterplatte 2 einerseits mittels lateralem Reibschluss gehalten ist, temperaturänderungsbedingte laterale Spannungen so gering bleiben, dass die Leiterplatte intakt bleibt. Dies ist insbesondere bei spröden Leiterplattenmaterialien wie beispielsweise einer Keramik vorteilhaft.

Bevorzugt ist die Leiterplatte durch einen Sinterprozess hergestellt, wobei die Leiterplatte beispielsweise ein keramisches Material aufweist, wobei das keramische Material insbesondere eine Niedertemperatur-Einbrand-Keramik ist. Niedertemperatur-Einbrand-Keramik, auch als Low Temperature Cofired Ceramics (LTCC) bekannt, eignet sich besonders als Grundlage zur Fertigung von Spulenvorrichtungen aufgrund guter Eigenschaften im Hinblick auf geringe Störung von Spuleneigenschaften und guter Aufbringbarkeit von elektrisch leitfähigen Leiterbahnen, welche zur Ausbildung von Spulen herangezogen werden können. Ein Nachteil solcher Keramiken ist jedoch eine im Vergleich zu Metallen höhere Sprödigkeit und somit erhöhte Empfindlichkeit gegenüber mechanischer Belastung. Durch eine erfindungsgemäße Anpassung des ersten Wärmeausdehnungskoeffizients und des zweiten Wärmeausdehnungskoeffizients lässt sich dieser Nachteil jedoch umgehen.

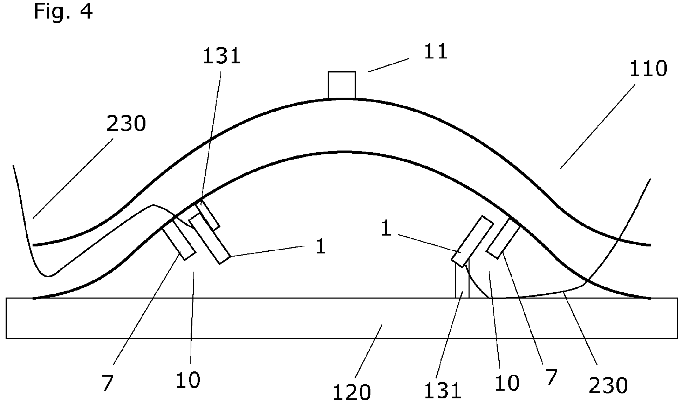

Fig. 4 skizziert schematisch eine Seitenansicht auf ein Messrohr 110 eines Messgeräts mit zwei Schwingungssensoren 10 umfassend jeweils eine erfindungsgemäße Spulenvorrichtung 1 aus einer Seitenansicht SA, siehe Fig. 2, wobei die Schwingungssensoren jeweils mittels einer erfindungsgemäßen Haltevorichtung 131 mit dem Messrohr 110 verbunden sind (siehe linker Schwingungssensor) und dazu eingerichtet sind, dessen Schwingungsbewegungen zu folgen, oder mit dem Trägerkörper 120 mittels einer erfindungsgemäßen Haltevorrichtung 131 mechanisch verbunden sind (siehe rechte Spulenvorrichung). Magnetvorrichtungen 7, welche wie hier skizziert an einem durch das gezeigte Messrohr verdeckten zweiten Messrohr montiert sind und dazu eingerichtet sind, dessen Schwingungsbewegungen folgen, wechselwirken im Messbetrieb mit den zugehörigen Spulenvorrichtungen über elektromagnetische Felder. Bei entgegengesetzten Messrohrschwingungen sind somit Schwingungen mittels in der Spule induzierte elektrische Spannungen erfassbar.

Falls die Spulenvorrichtungen wie bei der linken Spulenvorrichtung skizziert am Messrohr befestigt sind, können die elektrischen Verbindungsleitungen 230 am Messrohr entlanggeführt werden. Falls die Spulenvorrichtungen am Trägerkörper befestigt sind, wie bei der rechten Spulenvorrichtung skizziert, können die elektrische Verbindungsleitung entlang des Trägerkörpers am Messrohr vorbeigeführt werden.

Alternativ kann der Messaufnehmer beispielsweise nur ein Messrohr aufweisen, wobei eine Magnetvorrichtung eines jeweiligen Sensors beispielsweise am Messrohr befestigt ist, und die zugehörige Spulenvorrichtung am Trägerkörper oder umgekehrt.

Falls die Spulen am Trägerkörper befestigt sind, weist jedes Messrohr pro Schwingungssensor eine Magnetvorrichtung mit jeweils mindestens einem Magnet auf.

Die in Fig. 4 gezeigten unterschiedlichen Befestigungen der Spulenvorrichtungen sind rein demonstrativ, der Fachmann wird bevorzugt verschiedene Spulenvorrichtungen bezüglich eines Messrohrs entweder am Messrohr oder am Trägerkörper befestigen, um ein symmetrisches Schwingverhalten des Messrohrs zu ermöglichen.

### Bezugszeichenliste

- 1: Spulenvorrichtung
- 2: Leiterplatte
- 3: Leiterplattenschicht
- 4: Spule
- 4.1: erstes Spulenende
- 4.2: zweites Spulenende
- 4.3: elektrisch leitfähige Leiterbahn
- 5: Kontaktierungselement
- 5.1: erstes Kontaktierungselemente
- 5.2: zweites Kontaktierungselemente
- 6: Bohrung
- 7: Magnetvorrichtung
- 10: Erreger
- 11: Sensor
- 100: Messaufnehmer
- 110: Messrohr
- 111: Einlauf
- 112: Auslauf
- 120: Trägerkörper
- 131: Haltevorrichtung
- 132: Halteelement
- 133: Schraube
- 134: Bohrung der Haltevorrichtung
- 135: Gewinde der Bohrung der Haltevorrichtung
- 136: Haltevorrichtungskörper
- 140: Sammler
- 141: erster Sammler
- 142: zweiter Sammler
- 150: Prozessanschluss
- 151: Flansch
- 200: Messgerät
- 210: elektronische Mess-Betriebsschaltung
- 220: Elektronikgehäuse
- 230: elektrische Verbindungsleitungen

## Patentansprüche

1. Messaufnehmer (100) eines Messgeräts zum Erfassen eines Massedurchflusses oder einer Dichte eines durch mindestens ein Messrohr (110) des Messaufnehmers strömenden Mediums, umfassend:
das mindestens eine Messrohr mit einem Einlauf (111) und einem Auslauf (112), welches dazu eingerichtet ist, das Medium zwischen Einlauf und Auslauf zu führen;
mindestens einen Erreger (10), welcher dazu eingerichtet ist, das mindestens eine Messrohr zu Schwingungen anzuregen;
mindestens zwei Sensoren (11), welche dazu eingerichtet sind, die Auslenkung der Schwingungen mindestens eines Messrohrs zu erfassen;
wobei mindestens ein Erreger sowie die Sensoren jeweils eine Spulenvorrichtung (1) mit jeweils mindestens einer Spule (4), sowie jeweils eine Magnetvorrichtung aufweisen, wobei die Magnetvorrichtungen relativ zur jeweiligen Spulenvorrichtung bewegbar sind,
und wobei die Magnetvorrichtung und die Spulenvorrichtung eines Erregers bzw. Sensors mittels magnetischer Felder miteinander wechselwirken,
wobei die Spulenvorrichtung eine Leiterplatte (2) mit mindestens einer Leiterplattenschicht (3) aufweist, wobei die Spule auf und/oder in mindestens einer Leiterplattenschicht angeordnet ist, wobei die Leiterplatte einen ersten Wärmeausdehnungskoeffizienten aufweist,
wobei der Messaufnehmer einen Trägerkörper (120) aufweist, welcher dazu eingerichtet ist, das Messrohr zu halten,
wobei zumindest eine Spulenvorrichtung der Sensoren und/oder die Spulenvorrichtung des Erregers jeweils mittels einer Haltevorrichtung (131) am Trägerkörper oder an einem Messrohr befestigt ist,
**dadurch gekennzeichnet, dass** die Haltevorrichtung dazu eingerichtet ist, die Leiterplatte einzuspannen um die Leiterplatte mittels lateralem Reibschluss zu halten, wobei die Leiterplatte mittels mindestens einem Halteelement (132) der Haltevorrichtung mit der Haltevorrichtung mechanisch kontaktiert ist,
wobei das Halteelement einen zweiten Wärmeausdehnungskoeffizienten aufweist,
wobei der erste Wärmeausdehnungskoeffizient und der zweite Wärmeausdehnungskoeffizient weniger als
3*10⁻⁶ / Kelvin, und insbesondere weniger als weniger als
2*10⁻⁶ / Kelvin und bevorzugt weniger als weniger als
1.5*10⁻⁶ / Kelvin voneinander abweichen,
wobei die Leiterplatte (2) durch einen Sinterprozess hergestellt ist, wobei die Leiterplatte beispielsweise ein keramisches Material aufweist,
wobei das keramische Material insbesondere eine Niedertemperatur-Einbrand-Keramik ist.

2. Messaufnehmer nach Anspruch 1,
wobei das Halteelement zumindest eines der folgenden Materialien umfasst: Zirkonium Titan, Tantal.

3. Messaufnehmer nach einem der vorigen Ansprüche,
wobei der erste Wärmeausdehnungskoeffizient kleiner ist als 9*10⁻⁶ / Kelvin, und insbesondere kleiner als 8*10⁻⁶ / Kelvin, und bevorzugt kleiner als 7*10⁻⁶ / Kelvin ist.

4. Messaufnehmer nach einem der vorigen Ansprüche,
wobei die Leiterplatte mittels einer Schraubung oder Klemmung gehalten ist.

5. Messaufnehmer nach einem der vorigen Ansprüche,
wobei das Halteelement (132) an einem Haltevorrichtungskörper (136) befestigt ist.

6. Messaufnehmer nach Anspruch 4 oder 5,
wobei die Leiterplatte eine Bohrung (6) aufweist, in welcher Bohrung eine Schraube (133) angeordnet ist, welche in ein Gewinde (135) einer Bohrung (134) der Haltevorrichtung (131) eingreift, wobei mittels der Schraube eine Pressung auf die Leiterplatte ausgeübt wird.

7. Messaufnehmer nach einem der vorigen Ansprüche,
wobei die Haltevorrichtung (131) am Trägerkörper (120) befestigt ist.

8. Messaufnehmer nach einem der vorigen Ansprüche,
wobei der Messaufnehmer zwei Sammler (140) aufweist, wobei ein erster Sammler (141) auf einer stromaufwärtsgerichteten Seite des Messaufnehmers dazu eingerichtet ist, ein aus einer Rohrleitung in den Messaufnehmer einströmendes Medium aufzunehmen und zum Einlauf des mindestens einen Messrohrs zu führen,
wobei ein zweiter Sammler (142) dazu eingerichtet ist, das aus dem Auslauf des mindestens einen Messrohrs austretende Medium aufzunehmen und in die Rohrleitung zu führen.

9. Messaufnehmer nach einem der vorigen Ansprüche,
wobei der Messaufnehmer zwei Prozessanschlüsse (150), insbesondere Flansche (151) aufweist, welche dazu eingerichtet sind, den Messaufnehmer mit einer Rohrleitung zu verbinden.

10. Messgerät (200) umfassend:
Einen Messaufnehmer (100) nach einem der vorigen Ansprüche,
eine elektronische Mess-/Betriebsschaltung (210), wobei die elektronische Mess-/Betriebsschaltung dazu eingerichtet ist, die Sensoren und den Erreger zu betreiben, und mittels elektrischer Anschlussleitungen (230) mit diesen verbunden ist,
wobei die mindestens eine elektrische Verbindung mittels einer Kabelführung zur elektronischen Mess-/Betriebsschaltung geführt ist,
wobei die elektronische Mess-/Betriebsschaltung weiter dazu eingerichtet ist, Massedurchflussmesswerte und/oder Dichtemesswerte zu ermitteln und bereitzustellen,
wobei das Messgerät insbesondere ein Elektronikgehäuse (220) zum Behausen der elektronischen Mess-/Betriebsschaltung aufweist.

## Claims

1. A measuring sensor (100) of a measuring device for detecting a mass flow or a density of a medium flowing through at least one measuring tube (110) of the measuring sensor, comprising:
The at least one measuring tube with an inlet (111) and an outlet (112), said tube being configured to conduct the medium between the inlet and outlet;
at least one exciter (10), which is configured to cause the at least one measuring tube to oscillate;
at least two sensors (11), which are adapted to detect the deflection of the oscillations of at least one measuring tube;
wherein at least one exciter and the sensors each have a coil device (1) with at least one coil (4) and a magnetic device, wherein the magnetic devices can be moved relative to the respective coil device,
and wherein the magnetic device and the coil device of an exciter or sensor interact with one another by means of magnetic fields,
wherein the coil device has a PCB (2) with at least one PCB layer (3), wherein the coil is arranged on and/or in at least one PCB layer, wherein the PCB has a first coefficient of thermal expansion,
wherein the measuring sensor has a support body (120) which is adapted to hold the measuring tube in place,
wherein at least one coil device of the sensors and/or the coil device of the exciter is/are in each case attached to the support body or to a measuring tube by means of a fixture (131),
**characterized in that** the fixture is adapted to clamp the PCB in order to hold the PCB in place by means of a lateral frictional connection, wherein the PCB is mechanically connected to the fixture by means of at least one retaining element (132) of the fixture,
wherein the retaining element has a second coefficient of thermal expansion,
wherein the first coefficient of thermal expansion and the second coefficient of thermal expansion have less than
3*10⁻⁶/Kelvin, and in particular less than
2*10⁻⁶/Kelvin, and preferably less than
1.5*10⁻⁶/Kelvin difference between them,
wherein the PCB (2) is produced by a sintering process, wherein the PCB has, for example, a ceramic material,
wherein the ceramic material is in particular a low-temperature co-fired ceramic.

2. The measuring sensor as claimed in claim 1,
wherein the retaining element comprises at least one of the following materials: Zirconium, titanium, tantalum.

3. The measuring sensor as claimed in one of the preceding claims,
wherein the first coefficient of thermal expansion is less than 9*10⁻⁶/Kelvin, and in particular less than 8*10⁻⁶/Kelvin, and preferably less than 7*10⁻⁶/Kelvin.

4. The measuring sensor as claimed in one of the preceding claims,
wherein the PCB is held in place by means of a screw or clamp.

5. The measuring sensor as claimed in one of the preceding claims,
wherein the retaining element (132) is attached to a fixture body (136).

6. The measuring sensor as claimed in claim 4 or 5,
wherein the PCB has a hole (6), in which hole a screw (133) is arranged, which engages in a thread (135) of a hole (134) in the fixture (131), wherein a pressure is exerted on the PCB by means of the screw.

7. The measuring sensor as claimed in one of the preceding claims,
wherein the fixture (131) is attached to the support body (120).

8. The measuring sensor as claimed in one of the preceding claims,
wherein the measuring sensor has two collectors (140), wherein a first collector (141) on an upstream side of the measuring sensor is designed to receive a medium flowing into the measuring sensor from a pipeline and to conduct it to the inlet of the at least one measuring tube,
wherein a second collector (142) is adapted to receive the medium emerging from the outlet of the at least one measuring tube and to conduct it into the pipeline.

9. The measuring sensor as claimed in one of the preceding claims,
wherein the measuring sensor has two process connections (150), in particular flanges (151), which are adapted to connect the measuring sensor to a pipeline.

10. A measuring device (200) comprising:
A measuring sensor (100) as claimed in one of the preceding claims;
an electronic measuring/operating circuit (210), wherein the electronic measuring/operating circuit is adapted to operate the sensors and the exciter and is connected to these by means of electrical connection cables (230),
wherein the at least one electrical connection is routed to the electronic measuring/operating circuit by means of a cable guide,
wherein the electronic measuring/operating circuit is further adapted to determine and provide measured mass flow values and/or measured density values,
wherein the measuring device has, in particular, an electronics enclosure (220) to house the electronic measuring/operating circuit.

## Revendications

1. Transmetteur (100) d'un appareil de mesure, lequel transmetteur est destiné à la mesure d'un débit massique ou une densité d'un produit s'écoulant à travers au moins un tube de mesure (110) du transmetteur, lequel transmetteur comprend :
l'au moins un tube de mesure avec une entrée (111) et une sortie (112), lequel tube de mesure est conçu pour guider le produit entre l'entrée et la sortie ;
au moins un excitateur (10), lequel est conçu pour faire vibrer l'au moins un tube de mesure ;
au moins deux capteurs (11), lesquels sont conçus pour mesurer l'amplitude des vibrations d'au moins un tube de mesure ;
au moins un excitateur ainsi que les capteurs présentant chacun un dispositif de bobine (1) avec au moins une bobine (4), ainsi qu'un dispositif magnétique, les dispositifs magnétiques étant mobiles par rapport au dispositif à bobine respectif,
et le dispositif magnétique et le dispositif de bobine d'un excitateur ou d'un capteur interagissant entre eux au moyen de champs magnétiques,
le dispositif de bobine comprenant une carte de circuit imprimé (2) présentant au moins une couche de carte de circuit imprimé (3), la bobine étant disposée sur et/ou dans au moins une couche de carte de circuit imprimé, la carte de circuit imprimé présentant un premier coefficient de dilatation thermique,
le transmetteur de mesure comprenant un corps de support (120), lequel est conçu pour supporter le tube de mesure,
au moins un dispositif de bobine des capteurs et/ou le dispositif de bobine de l'excitateur étant fixé(s) respectivement au corps de support ou à un tube de mesure au moyen d'un dispositif de maintien (131),
**caractérisé en ce que** le dispositif de maintien est conçu pour serrer la carte de circuit imprimé afin de maintenir la carte de circuit imprimé par friction latérale, la carte de circuit imprimé étant en contact mécanique avec le dispositif de maintien au moyen d'au moins un élément de maintien (132) du dispositif de maintien,
l'élément de maintien présentant un deuxième coefficient de dilatation thermique,
le premier coefficient de dilatation thermique et le deuxième coefficient de dilatation thermique différant l'un de l'autre de moins de
3* 10⁻⁶ / Kelvin, et notamment de moins de
2* 10⁻⁶ / Kelvin et de préférence de moins de
1,5*10⁻⁶ / Kelvin,
la carte de circuit imprimé (2) étant fabriquée par un procédé de frittage, la carte de circuit imprimé comprenant par exemple un matériau céramique,
le matériau céramique étant notamment une céramique cuite à basse température.

2. Transmetteur selon la revendication 1,
pour lequel l'élément de maintien comprend au moins l'un des matériaux suivants : zirconium, titane, tantale.

3. Transmetteur selon l'une des revendications précédentes,
pour lequel le premier coefficient de dilatation thermique est inférieur à 9*10⁻⁶ / Kelvin, et notamment inférieur à 8*10⁻⁶ / Kelvin, et de préférence inférieur à 7*10⁻⁶ / Kelvin.

4. Transmetteur selon l'une des revendications précédentes,
pour lequel la carte de circuit imprimé est maintenue au moyen d'un vissage ou d'un serrage.

5. Transmetteur selon l'une des revendications précédentes,
pour lequel l'élément de maintien (132) est fixé à un corps de dispositif de maintien (136).

6. Transmetteur selon la revendication 4 ou 5,
pour lequel la carte de circuit imprimé présente un perçage (6), perçage dans lequel est disposée une vis (133) qui s'engage dans un taraudage (135) d'un perçage (134) du dispositif de maintien (131), une pression étant exercée sur la carte de circuit imprimé au moyen de la vis.

7. Transmetteur selon l'une des revendications précédentes,
pour lequel le dispositif de maintien (131) est fixé au corps de support (120).

8. Transmetteur selon l'une des revendications précédentes,
pour lequel le transmetteur présente deux collecteurs (140), un premier collecteur (141) sur un côté amont du transmetteur étant conçu pour recevoir un produit s'écoulant d'une conduite dans le transmetteur et le guider vers l'entrée de l'au moins un tube de mesure,
un deuxième collecteur (142) étant conçu pour recevoir le produit sortant de la sortie de l'au moins un tube de mesure et le guider vers la conduite.

9. Transmetteur selon l'une des revendications précédentes,
pour lequel le transmetteur de mesure présente deux raccords process (150),
notamment des brides (151), lesquels raccords sont conçus pour relier le transmetteur à une conduite.

10. Appareil de mesure (200) comprenant :
un transmetteur (100) selon l'une des revendications précédentes ;
un circuit électronique de mesure/fonctionnement (210), lequel circuit est conçu pour faire fonctionner les capteurs et l'excitateur et lequel circuit est relié aux capteurs et à l'excitateur au moyen de câbles de raccordement électriques (230),
l'au moins une liaison électrique étant guidée vers le circuit électronique de mesure/fonctionnement au moyen d'un guide-câble,
le circuit électronique de mesure/fonctionnement étant en outre conçu pour déterminer et mettre à disposition des valeurs mesurées de débit massique et/ou des valeurs mesurées de densité,
l'appareil de mesure comprenant notamment un boîtier électronique (220) pour loger le circuit électronique de mesure/ fonctionnement.
